**Europäisches Patentamt**

**European Patent Office**

**Office européen des brevets**

(19)

(11) Veröffentlichungsnummer : **0 413 185 B1**

## (12) EUROPÄISCHE PATENTSCHRIFT

(45) Veröffentlichungstag der Patentschrift :
**12.10.94 Patentblatt 94/41**

(51) Int. Cl.$^5$ : **H04N 5/92**, H04N 9/84

(21) Anmeldenummer : **90114540.9**

(22) Anmeldetag : **28.07.90**

(54) **Videogerät.**

(30) Priorität : **17.08.89 DE 3927102**

(43) Veröffentlichungstag der Anmeldung :
**20.02.91 Patentblatt 91/08**

(45) Bekanntmachung des Hinweises auf die
Patenterteilung :
**12.10.94 Patentblatt 94/41**

(84) Benannte Vertragsstaaten :
**DE FR GB IT NL**

(56) Entgegenhaltungen :
**DE-A- 3 828 102**
**US-A- 4 177 481**
**US-A- 4 208 673**
**US-A- 4 554 595**
**US-A- 4 641 206**

(73) Patentinhaber : **Nokia (Deutschland) GmbH**
**Östliche Karl-Friedrich-Strasse 132**
**D-75175 Pforzheim (DE)**

(72) Erfinder : **Reime, Gerd**
**Kelterstrasse 39a**
**D-7131 Wurmberg (DE)**

## Beschreibung

TECHNISCHES GEBIET

Die Erfindung betrifft ein Videogerät, nämlich eine Vorrichtung zum Aufzeichnen von FM-Signalen in Schrägspuren eines Video-Magnetbandes. Die meisten derartigen Aufzeichnungsvorrichtungen enthalten auch eine Vorrichtung zum Wiedergeben von FM-Signalen, die in Schrägspuren eines Bandes aufgezeichnet sind, jedoch ist dies nicht zwingend.

Es bestehen verschiedene Normen zum Aufzeichnen von Signalen in Schrägspuren eines Video-Magnetbandes. Den meisten Normen ist gemeinsam, daß das amplitudenmodulierte Luminanzsignal, das den Inhalt eines Bildes darstellt, als FM-Signal aufgezeichnet wird. Bei der Wiedergabe wird das gelesene FM-Signal in ein amplitudenmoduliertes Luminanzsignal zurückgewandelt, da alle Analogfernsehnormen mit einem amplitudenmodulierten Luminanzsignal arbeiten.

STAND DER TECHNIK

Bekannte Vorrichtungen zum Aufzeichnen von FM-Signalen in Schrägspuren eines Video-Magnetbandes weisen einen FM-Modulator zum Wandeln eines amplitudenmodulierten Luminanzsignales in ein FM-Signal um. Dieses Signal wird an eine Schreibkopfanordnung gegeben, die dazu dient, das FM-Signal auf das Band zu schreiben. Für verschiedene Synchronisierungsmaßnahmen gibt eine Schaltungsanordnung Zeilensignale und Spursignale aus. Die Spursignale zeigen an, wann ein neues Halb- oder Vollbild beginnt und die Zeilensignale zeigen an, wann innerhalb eines solchen Bildes die Information für eine neue Zeile startet.

Zum Wiedergewinnen des aufgezeichneten FM-Signales wird eine Lesekopfanordnung verwendet, die die aufgezeichneten Spuren abtastet. Der Kopfspalt in jedem Kopf der Lesekopfanordnung ist etwas breiter als eine Spur, so daß er auch Bereiche der Nachbarspuren abtastet zur problemlosen Spurnachführung. Dies führt zum sogenannten Übersprechen. Um das Übersprechen zu verringern, werden die FM-Signale in benachbarten Spuren mit Hilfe von Schreibköpfen aufgezeichnet, die um einen sogenannten Azimutwinkel, der typischerweise ± 6° beträgt, gegenüber der Spurrichtungsnormalen geneigt sind. Trotz dieser Maßnahme bleibt noch ein kleiner Resteffekt des Übersprechens bestehen, der sich z.B. durch Flimmern, Schlierenbildung und schwimmende Kanten bemerkbar macht.

Bei der Wiedergabe im sogenannten Standardverfahren der Videosignalaufzeichnung sind die eben angesprochenen Fehler nur sehr gering. Eine erhebliche Bildverschlechterung tritt jedoch beim sogenannten Longplay-Verfahren auf, bei dem das Band nur mit halber Geschwindigkeit läuft, wodurch doppelt so viele Spuren geschrieben werden wie beim Standardverfahren. Werden beim Wiedergeben im Longplay-Verfahren dieselben Leseköpfe verwendet wie im Standardverfahren, werden beim Lesen einer Spur die beiden Nachbarspuren jeweils im Mittel zu mehr als zur jeweiligen Hälfte mit abgetastet. Die dabei hervorgerufenen Übersprechstörungen sind nicht mehr tragbar, weswegen im Longplay-Verfahren Leseköpfe verwendet werden müssen, deren Kopfspalt an die Breite der schmaleren Spuren angepaßt ist. Dies erfordert es, daß ein Videogerät, das wahlweise im Standardverfahren oder im Longplay-Verfahren arbeitet, jeweils eine gesonderte Lesekopfanordnung für die beiden Verfahren aufweisen muß. Das verteuert derartige Geräte erheblich.

Es besteht demgemäß seit langem das Problem, die bekannten Aufzeichnungsverfahren so weiter zu verbessern, daß beim Lesen der aufgezeichneten Signale noch geringere Übersprechfehler auftreten als bisher, so daß im Standardverfahren wiedergegebene Bilder noch ruhiger werden und es unter Umständen sogar möglich wird, Signale, die mit halber Standardgeschwindigkeit aufgezeichnet wurden, mit Standard-Lesekopfanordnungen zu lesen.

DARSTELLUNG DER ERFINDUNG

Die erfindungsgemäße Vorrichtung zum Aufzeichnen von FM-Signalen in Schrägspuren eines Video-Magnetbandes weist wie herkömmliche Vorrichtungen einen FM-Modulator, eine Schreibkopfanordnung und eine Schaltungsanordnung auf, welche Funktionsmittel die oben angegebenen Aufgaben wahrnehmen. Zusätzlich ist zwischen FM-Modulator und Schreibkopfanordnung ein Phasenschieber vorhanden, der das Zeilensignal und das Spursignal erhält, um abhängig von der jeweils vorliegenden Spur und der jeweils vorliegenden Zeile unterschiedliche Phasenverschiebungen an den vom Modulator gelieferten FM-Signalen vor deren Aufzeichnen auf dem Band vorzunehmen. Der Phasenschieber ist so beschaffen, daß er für folgende Phasenverschiebungen sorgt:
- für eine beliebige Zeile n einer beliebigen Spur m ist die Phasenverschiebung eine beliebige festgelegte erste Phasenverschiebung P1,

- für die Zeile n+1 derselben Spur m ist die Phasenverschiebung eine beliebige festgelegte zweite Phasenverschiebung P2,
- für die in der folgenden Spur m+1 unter der Zeile n liegende Zeile ist die Phasenverschiebung eine beliebige festgelegte dritte Phasenverschiebung P3,
- und für die in der folgenden Spur m+1 unter der Zeile n+1 liegende Zeile weist eine vierte Phasenverschiebung P4 einen durch die anderen drei Phasenverschiebungen so vorbestimmten Wert auf, daß die Differenz D zwischen der Differenz D1 der vierten und der zweiten Phasenverschiebung (D1 = P4 - P2) und der Differenz D2 der dritten und der ersten Phasenverschiebung (D2 = P3 - P1) 180° beträgt (D = D1 - D2 = 180°).

Besonders einfach arbeitet die erfindungsgemäße Vorrichtung dann, wenn möglichst viele der vier Phasenverschiebungen den Wert Null aufweisen. So ist es von Vorteil, den Phasenschieber so auszubilden, daß er für die erste, zweite und dritte Phasenverschiebung, gemäß der vorstehenden Definition, jeweils den Phasenverschiebungswert 0° ausgibt, aber für die vierte Phasenverschiebung 180°. Mit anderen Worten heißt dies, daß in einer Spur keine Zeile einer Phasenverschiebung unterworfen wird, während in der Folgezeile abwechselnd eine Phasenverschiebung von 180° und keine Phasenverschiebung erfolgt.

Die genannte Maßnahme der Phasenverschiebung sei an einem Beispiel erläutert. Es sei über den ganzen Bildschirm eines Wiedergabegerätes eine einheitlich mittelhelle Fläche darzustellen. Bei herkömmlich aufgezeichnetem Signal führen Übersprechfehler dazu, daß z. B. im oberen Bildviertel in einem ersten Halbbild die Helligkeit von Zeile zu Zeile geringfügig gegenüber der Originalhelligkeit ansteigt. Im nächsten Viertel falle sie von Zeile zu Zeile bis auf den Originalwert zurück, falle dann im dritten Viertel von Zeile zu Zeile um eine kleine Differenz noch unter die Helligkeit der Originalzeilen und steige im letzten Viertel wieder bis zur Originalhelligkeit an. In jedem weiteren Halbbild mögen diese flächenhaften Aufhellungen und Abdunklungen anders liegen. Im zeitlichen und örtlichen Mittel entspricht die Helligkeit des wiedergegebenen Bildes der Helligkeit des Originals. Die zeitliche Änderung der flächenhaften Helligkeitsänderungen ist mit dem Auge deutlich sichtbar, z.B. als streifiges Rauschen oder Moirée.

Wird stattdessen ein mit einer erfindungsgemäßen Vorrichtung aufgezeichnetes FM-Signal abgespielt und wiedergegeben, erfolgt die Helligkeitsmittelung zeitlich und örtlich von Zeile zu Zeile. Die beim Aufzeichnen vorgenommene Phasenverschiebung sorgt nämlich dafür, daß dann, wenn die Helligkeit einer wiedergegebenen Zeile wegen Übersprechens gegenüber der Helligkeit der Originalzeile etwas erhöht ist, die Helligkeit der wiedergegebenen Folgezeile um denselben Betrag erniedrigt ist. Sowohl die zeitliche wie auch die örtliche Mitteilung sind demgemäß enorm verkleinert. Die Mitteilung wird nicht flächenhaft über die Dauer mehrerer Bilder erzeugt, sondern unmittelbar von Zeile zu Zeile.

Auf entsprechende Weise werden von Zeile zu Zeile Fehler gemittelt, wie sie z. B. an Kanten zwischen unterschiedlich hellen Flächen auftreten. Dies wird weiter unten veranschaulicht.

Es wurde bereits oben erläutert, daß beim Standardverfahren Übersprechfehler nur sehr schwach ausgebildet sind. Beim Wiedergeben von FM-Signalen, die mit einer erfindungsgemäßen Vorrichtung aufgezeichnet sind, kommt es dementsprechend aufgrund von Übersprechen nur zu sehr geringen gegenläufigen Helligkeitsänderungen von Zeile zu Zeile im wiedergegebenen Bild. Diese geringen abwechselnden Helligkeitsänderungen von Zeile zu Zeile gegenüber dem Original fallen bereits bei relativ geringem Betrachtungsabstand nicht mehr auf. Wird dagegen ein Signal abgespielt, das nur mit halber Bandgeschwindigkeit (Longplay-Verfahren) aufgenommen wurde, ist das Übersprechsignal stärker, weswegen die abwechselnden Aufhellungen und Abdunklungen von Zeile zu Zeile bei geringem Betrachtungsabstand vom Auge aufgelöst werden. Um auch in diesem Fall verstärkten Übersprechens einen geringen Betrachtungsabstand zu ermöglichen, verfügt eine Weiterbildung der erfindungsgemäßen Vorrichtung über eine Schaltung, die die von Zeile zu Zeile wechselnden relativ geringen Aufhellungen und Abdunklungen mittelt, wie sie durch das Übersprechen hervorgerufen sind. Größere Helligkeitsänderungen von Zeile zu Zeile werden dagegen als solche wiedergegeben, da sie in der Regel Heligkeitsänderungen im Original entsprechen. Die weitergebildete Vorrichtung verfügt zu diesem Zweck über ein Verzögerungsglied, das das empfangene demodulierte Signal, also das so gebildete amplitudenmodulierte Luminanzsignal, um die Dauer einer Zeile verzögert. Ein verzögertes und ein unverzögertes Luminanzsignal werden jeweils einerseits addiert und andererseits subtrahiert, und das Differenzsignal wird nach Bearbeitung zum Additionssignal addiert.

Das Aufzeichnen von FM-Signalen mit der erfindungsgemäßen Vorrichtung sorgt also dafür, daß beim Wiedergeben der so aufgenommenen Signale Übersprechfehler von Zeile zu Zeile und nicht mehr über größere Flächen und Zeiten ausgemittelt werden. In Versuchen zeigte sich erstaunliche Verbesserung der Bildqualität. Es wurde daher versucht, Aufzeichnungen nur noch mit einem Drittel der Standardbandgeschwindigkeit vorzunehmen. In diesem Fall liegen drei Aufzeichnungsspuren auf der Breite einer herkömmlichen Standardspur. Bei einem derart engen Aufzeichnen ist das Übersprechen selbst beim Verwenden einer Lesekopfanordnung für Longplay so stark, daß mit in bekannter Weise aufgezeichneten Signalen kein brauchbares Bild erzielt werden konnte. Wurde beim Aufzeichnen dagegen die oben angegebene Phasenverschiebungsmaßnahme ergriffen, ergab sich ein ausgezeichnetes Bild. Die erfindungsgemäße Aufzeichnungsvorrichtung ermöglicht es demgemäß erstmals, FM-Signale mit einem Drittel der Standardbandgeschwindigkeit so aufzuzeichnen, daß beim Wiedergeben ein Bild guter Qualität erzielt wird.

KURZE BESCHREIBUNG DER FIGUREN

| | |
|---|---|
| Fig. 1 | Blockschaltbild einer Aufzeichnungsvorrichtung für FM-Signale, die Phasenverschiebungen unterzogen werden; |
| Fig. 2 | schematische Darstellung von drei Bandspuren mit jeweils mehreren Zeilen, die mit unterschiedlichen Phasenverschiebungen gegenüber dem FM-Signal von einem FM-Modulator aufgezeichnet wurden; |
| Fig. 3 | Darstellung entsprechend der von Fig. 2, jedoch mit anderer Anordnung von Phasenverschiebungen von 0° und 180°; |
| Fig. 4 | Darstellung zum Veranschaulichen einer Beziehung, wie sie allgemein für Phasenverschiebungen gelten muß, die die Schaltung gemäß Fig. 1 ausführt; |
| Fig. 5 | Darstellung von Phasenverschiebungen für jeweils zwei aufeinanderfolgende Zeilen in drei untereinander liegenden Spuren, zum Veranschaulichen der allgemeinen Beziehung gemäß Fig. 4; |
| Fig. 6 | Darstellung von jeweils zwei nebeneinander liegenden Zeilen in zwei untereinander liegenden Spuren mit ortsvariablen Phasenverschiebungen in den oberen Zeilen; |
| Fig. 7 | schematische Darstellung eines Bildschirms mit zwei unterschiedlich hellen Bildflächen; |
| Fig. 8 | Diagramm mit Luminanzsignalen, wie sie zum Bild gemäß Fig. 7 gehören, wobei in Fig. 8 im unteren Teil Spuren mit Zeilen aufgezeichnet sind, in denen die FM-Signale aufgezeichnet sind, aus denen die oben in Fig. 8 dargestellten Luminanzsignale gewonnen werden; |
| Fig. 9a und 9b | Schaltung zum Wiedergeben von FM-Signalen in solcher Weise, daß kleine Helligkeitsunterschiede von Zeile zu Zeile ausgemittelt werden, dagegen größere Helligkeitsänderungen von Zeile zu Zeile wiedergegeben werden; |
| Fig. 10 | Darstellung eines Bildschirms mit drei unterschiedlich hellen Bildflächen; und |
| Fig. 11 | Folge zeitkorrelierter Luminanzsignale zum Erläutern der Schaltung gemäß Fig. 9b. |

WEGE ZUM AUSFÜHREN DER ERFINDUNG

Alle angeführten Ausführungsbeispiele werden ausgehend von der PAL-VHS-Norm erläutert.

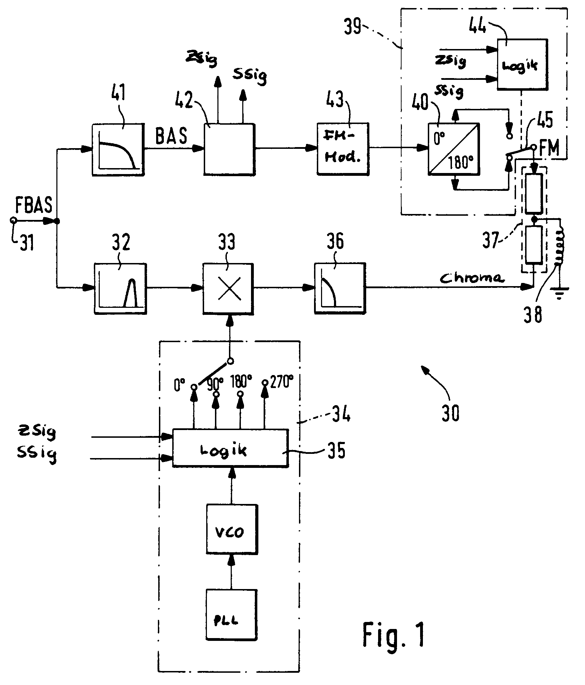

Der Aufzeichnungsschaltung 30 gemäß Fig. 1 wird über einen Eingangsanschluß 31 ein FBAS-Signal zugeführt. Im oberen Teil der Schaltung wird der BAS-Anteil und im unteren Teil der F-Anteil verarbeitet. Der untere Teil ist herkömmlich ausgebildet. Durch einen F-Hochpaß 32 wird das F-Signal aus dem FBAS-Signal ausgeblendet und in einem Mischer 33 mit einer Mischfrequenz aus einer Mischfrequenzschaltung 34 gemischt. Letztere verfügt über eine Logik 35, die dafür sorgt, daß das Mischfrequenzsignal abhängig von der jeweils vorliegenden Spur und heile mit einer von vier vorgegebenen Phasen ausgegeben wird. Welche Spur und welche Zeile jeweils vorliegt, wird durch ein Spursignal SSig beziehungsweise ein Zeilensignal ZSig angezeigt. Das Gemischte Signal gelangt zu einem Chromatiefpaß 36, der ein Chromasignal an eine Additionsschaltung 37 ausgibt, in der das Chromasignal zu dem vom oberen Schaltungsteil herkommenden FM-Signal addiert wird. Das addierte Signal wird an eine Kopfspulenanordnung 38 in einer Schreibkopfanordnung ausgegeben.

Auch der obere Teil der Aufzeichnungsschaltung 30 stimmt weitgehend mit bekannten Schaltungen überein, abgesehen von einem Phaseninverter 39. Aus dem FBAS-Signal wird durch einen BAS-Tiefpaß 41 das BAS-Signal abgetrennt. Es gelangt an eine Signalverarbeitungsschaltung 42, die das BAS-Signal in bekannter Weise bearbeitet, bevor es einem FM-Modulator 43 zugeführt wird. Die Signalverarbeitungsschaltung 42 gibt das bereits genannte Spursignal Ssig und Zeilensignal ZSig aus.

Zwischen FM-Modulator und Additionsschaltung 37 befindet sich derjenige Teil der Schaltung, der diese Schaltung von bekannten Schaltungen unterscheidet. Das FM-Signal gelangt nämlich nicht unmittelbar vom FM-Modulator 43 zur Additionsschaltung 37, sondern über den Phaseninverter 39. Dieser besteht im Blockschaltbild gemäß Fig. 1 aus einem Phaseninvertierglied 40, einer Schaltlogik 44 und einem von letzterer geschalteten Schalter 45. Die Schaltlogik 44 betätigt den Schalter 45 abhängig von der jeweils vorliegenden Spur und Zeile. Die Information über Spur und Zeile wird über das Spursignal Ssig und das Zeilensignal ZSig zugeführt.

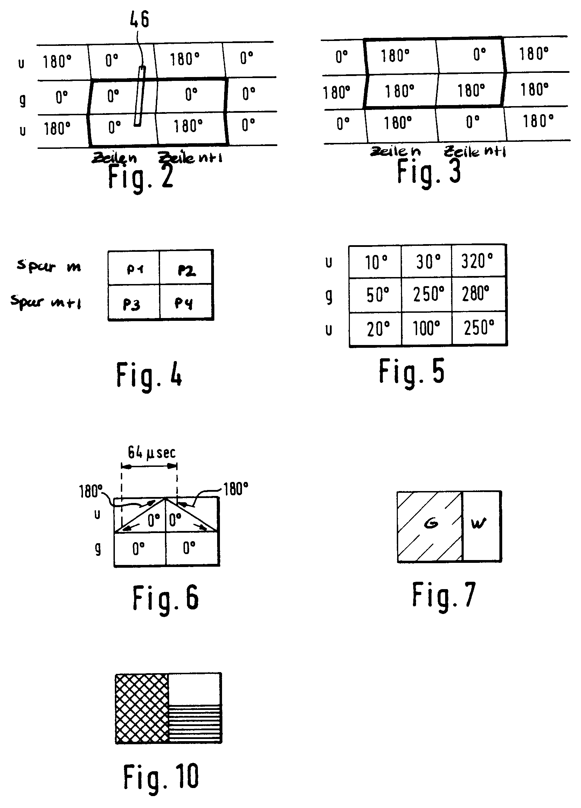

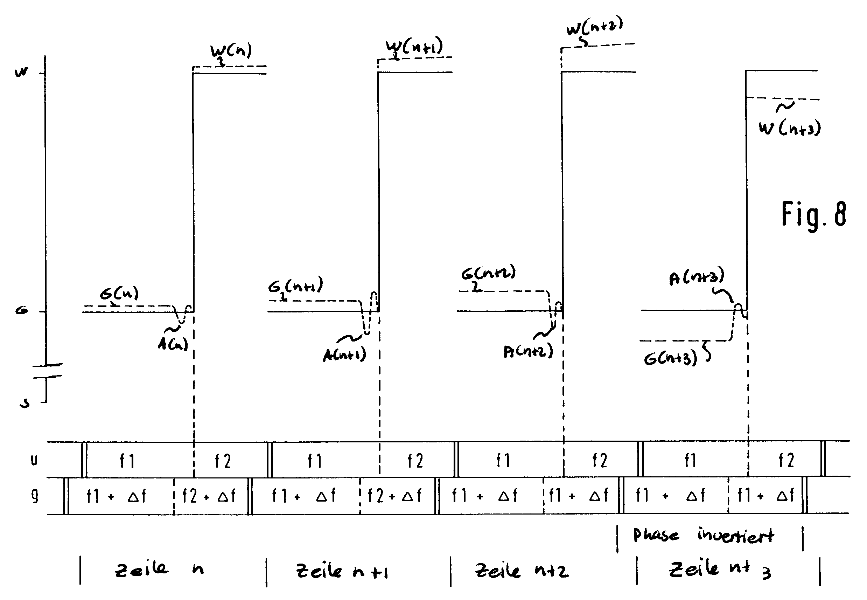

Bevor anhand der Fig. 7 und 8 die Wirkung phaseninvertiert aufgezeichneter FM-Signale erläutert wird, seien anhand der Fig. 2 bis 6 verschiedene phasenverschiebungen erläutert, wie sie beim Aufzeichnen vorgenommen werden können.

In Fig. 3 sind drei untereinander liegende Schrägspuren dargestellt. Der Einfachheit halber sind die Spuren waagerecht verlaufend gezeichnet, was ein schrägliegendes (nicht dargestelltes) Band voraussetzt. Die untereinander liegenden Spuren sind mit u bzw. g bezeichnet, was "ungeradzahlig" bzw. "geradzahlig" bedeuten soll. Welche Spur als ungeradzahlig und welche als geradzahlig bezeichnet wird, ist frei wählbar. In jeder der drei Spuren sind vier aufeinanderfolgende Zeilen dargestellt, die jeweils genau untereinander liegen. Die aufgezeichneten Magnetlinien stehen unter einem Azimutwinkel von 6° schräg zur Spurrichtungsnormalen. Ein Lesekopfspalt 46 liest gerade die Zeile (n) in der mittleren, geradzahligen Spur. Er ist parallel zur Richtung der Magnetlinien auf dieser Spur ausgerichtet. Dadurch erfaßt er Feldänderungen von einer Magnetlinie zur anderen auf der mittleren Spur mit voller Stärke. Feldänderungen auf den benachbarten Spuren, in die der Lesekopfspalt 46 ragt, liest er dagegen nur mit verminderter Stärke. Schneidet der Lesekopfspalt 46 dabei mehrere Magnetlinien, hebt sich die Übersprechinformation weitgehend auf. Es bleibt jedoch ein Rest bestehen, der zu Bildstörungen führt.

In Fig. 2 sind in den Zeilen Gradangaben eingetragen, und zwar 0° und 180°. Dies bedeutet Phasenverschiebungen gegenüber dem FM-Signal, wie es vom FM-Modulator 43 ausgegeben wird. Entsprechendes gilt für Phasenverschiebungen in anderen Figuren, z. B. für Phasenverschiebungen P1 - P4 in Fig. 4 oder für Phasenverschiebungen von z. B. 10° oder 250° in Fig. 5.

Es sei an dieser Stelle darauf hingewiesen, daß die absolute Phasenlage des FM-Signals unbekannt ist. Abgesehen von Zufällen ist die Phase des FM-Signals in jeder Zeile eine andere, selbst bei identischem Bildinhalt für alle Zeilen. Ist die Phase zu Beginn einer entsprechend herausgesuchten Zeile z. B. 0°, weist die Phase zu Beginn der nächsten Zeile in der Regel einen anderen Wert auf. Dies rührt daher, daß der Oszillator im FM-Modulator 43 dauernd schwingt, so daß die Phase der Schwingung am Anfang einer Zeile genau mit der Phase am Ende der vorigen Zeile übereinstimmt. Da aber nur zufällig eine ganzzahlige Anzahl von Schwingungen in die Zeit zwischen Anfang und Ende einer Zeile paßt, liegt die Phase am Ende einer Zeile in der Regel bei einem anderen Wert als am Anfang derselben Zeile. Daher liegt die Phase am Anfang der folgenden Zeile auch auf einem anderen Wert.

Die Tatsache, daß die Phasenlage des FM-Signals unbekannt ist, hat u. a. die Folge, daß es unerheblich ist, wann der Phaseninverter 39 die Phase invertiert. In den Ausführungsbeispielen wird davon ausgegangen, daß dies jeweils zu Beginn einer Zeile erfolgt, genauer gesagt im unsichtbaren Teil der Zeile. Würde ein Inverter verwendet, der die Phase ohne jede Umschaltstörung umschalten könnte, könnte ohne weiteres an beliebiger Stelle im sichtbaren Teil einer Zeile geschaltet werden. Wichtig ist nur, daß "von Zeile zu Zeile" geschaltet wird, d. h., daß beim Schalten eine Zeitdauer eingehalten wird, die der Dauer einer Zeile entspricht, also eine Dauer von 64 μs bei PAL-Norm. Die Tatsache, daß es unerheblich ist, wann innerhalb einer Zeile geschaltet wird, hat zur Folge, daß sich Spurversatzfehler nicht auswirken, sondern im Gegenteil bestens kompensiert werden können. Spurversätze treten sowohl unabsichtlich wie auch systembedingt auf, letzteres bei Aufzeichnungen nach dem Longplay-Verfahren. Dort beginnen die Zeilen in einer Spur, die unter einer anderen liegt, immer um ein Viertel der Zeilendauer nach den Zeilen in der oberen der beiden Spuren.

Aus Fig. 1 ist ersichtlich, daß beim Bearbeiten des F-Signals, was in herkömmlicher Weise erfolgt, ebenfalls ein Phasenschieben vorgenommen wird. Hierbei ist die Phase aber exakt auf die Phase des Burst-Signals bezogen, das zu Beginn jeder Zeile ausgegeben wird. Beim Wiedergeben des so bearbeiteten F-Signals muß die verschobene Phase wieder in genauer Korrelation zum Burst-Signal zurückgeschoben werden. Dann erfolgt eine Verarbeitung mit Hilfe einer Verzögerungsanordnung, die dafür sorgt, daß sich durch Übersprechen bedingte Phasenverschiebungen genau aufheben. Wird dagegen das mit Phasenverschiebungen aufgezeichnete FM-Signal wiedergegeben, ist keinerlei weitere Bearbeitung nötig, um den Haupteffekt der Übersprechverminderung zu erzielen. Sollen noch Aufhellungen und Abdunklungen vermieden werden, wie sie beim Abspielen von Zeile zu Zeile auftreten, wenn Übersprechstörungen vorliegen, wird hierzu eine Verzögerungsschaltung verwendet, die jedoch anders arbeitet als die von der Bearbeitung des F-Signals (bzw. Chromasignals) her bekannte Schaltung. Es muß nämlich nicht zuvor ein genaues phasenkorreliertes Zurückschieben von Phasen erfolgen, die beim Aufzeichnen nach vorne verschoben wurden, und es werden auch nicht ein verzögertes und ein unverzögertes frequenzmoduliertes Chrominanzsignal überlagert, um durch Übersprechen bedingte phasenverschiebungen wechselseitig zu löschen, sondern es werden die demodulierten Signale der Bearbeitung in der Verzögerungsschaltung unterworfen, also Signale, die keinerlei Phaseninformation mehr enthalten.

Fig. 2 betrifft den Fall einer Aufzeichnung, bei der in den ungeradzahligen Spuren jeweils abwechselnd eine Phasenverschiebung von 0° und 180° vorgenommen wurde. In den geradzahligen Spuren wurde keine Phasenverschiebung vorgenommen. Fig. 3 unterscheidet sich demgegenüber dadurch, daß in den geradzahligen Zeilen jeweils eine Phasenverschiebung von 180° vorliegt. Sowohl in Fig. 2 wie auch in Fig. 3 ist jeweils eine Vierergruppe benachbarter Zeilen durch stärkere Umrandung hervorgehoben. Die Differenz der Phasenverschiebungen gegenüber dem FM-Signal vom FM-Modulator ist für die beiden vorderen, übereinanderliegenden Zeilen in den hervorgehobenen Kästchen jeweils 0°. Die Differenz der entsprechenden Phasenverschiebungen für die hinteren übereinanderliegenden Zeilen ist in beiden Fällen 180°. Die Differenz zwischen diesen beiden Differenzen ist ebenfalls 180°. Dieses Ergebnis der letzten Differenz gilt für alle beliebig gebildeten Blöcke von vier Zeilen in vier Quadranten.

Die Fig. 2 und 3 betreffen den Spezialfall, daß Phasenverschiebungen von 0° oder von 180° gegenüber dem FM-Signal vom FM-Modulator 43 vorgenommen werden. Fig. 4 stellt demgegenüber den allgemeinen Fall dar, gemäß dem in einer oberen Spur m das FM-Signal für eine beliebig gewählte Zeile n eine Phasenverschiebung P1 gegenüber dem FM-Signal vom FM-Modulator 43 aufweist. Für die Folgezeile n+1 in derselben Spur m gilt die Phasenverschiebung P2, für die vordere Zeile n in der darunterliegenden Spur m+1 gilt die Phasenverschiebung P3, und für die Folgezeile n+1 in der unteren Spur m+1 gilt die Phasenverschiebung P4. Der gewünschte Bildverbesserungseffekt wird immer dann erzielt, wenn folgende Beziehung gilt:

$$D = D1 - D2 = (P4 - P2) - (P3 - P1) = 180°$$

Fig. 5 veranschaulicht diese Beziehung durch ein Beispiel, gemäß dem in einer oberen Spur die Phasenverschiebungen des aufgezeichneten Signals gegenüber dem FM-Signal vom FM-Modulator 43 für drei beliebig herausgegriffene Zeilen 10°, 30° und 320° betragen. In der Folgespur sind die entsprechenden Phasenverschiebungen für die drei unter den Zeilen in der oberen Spur liegenden Zeilen 50°, 250° und 280°. In einer weiteren Spur betragen die Phasenverschiebungen für die Signale zu den drei entsprechenden Zeilen 20°, 100° und 250°. Für alle beliebig herausgegriffenen Viererblöcke von Zeilen gilt die vorstehend genannte Bedingung.

Bereits weiter oben wurde erläutert, daß die Tatsache, daß z.B. in einer Spur von Zeile zu Zeile die Phase invertiert werden soll, nicht zwingend bedeutet, daß das Invertieren jeweils zum Zeilenanfang erfolgen muß. Es kann vielmehr an beliebiger Stelle im nicht sichtbaren Teil der Zeile erfolgen, jedoch ist ein zeitlicher Abstand zwingend, der der Zeilendauer entspricht. Diese Tatsache hat zur Folge, daß die vier Zeilen in einem Viererblock nicht paarweise genau untereinanderliegen müssen, wie in Fig. 4 dargestellt, sondern daß die Zeilenpaare in den beiden Spuren in beliebiger Weise gegeneinander verschoben sein können. Um den Bildverbesserungseffekt zu erzielen, sollte jedoch die oben angegebene Relation der Phasenverschiebungsdifferenz auf solche Zeilenpaare in benachbarten Spuren angewendet werden, die sich in Spurrichtung gesehen überlappen, d. h. auf solche dargestellten Zeilen, die gleich oder benachbart numeriert sind.

Die Tatsache, daß beim Einhalten der Phasenverschiebungsbedingung nur auf einen Zeittakt von Zeilendauer zu achten ist, ermöglicht auch ein Phasenschieben, wie es anhand von Fig. 6 veranschaulicht ist. Die vier Zeilen im Block von Fig. 6 sind mit den mittleren Zeilen in den oberen beiden Spuren in Fig. 2 vergleichbar. Die beiden unteren Zeilen wurden mit einer Phasenverschiebung von 0° gegenüber dem FM-Signal vom FM-Modulator 43 aufgezeichnet. Bei den oberen Zeilen in Fig. 2 wurde dagegen die erste Zeile mit einer Phasenverschiebung von 0° und die zweite mit einer Phasenverschiebung von 180° aufgezeichnet. Fig. 6 modifiziert dieses Vorgehen dahingehend, daß in der ersten oberen Zeile vom Anfang zum Ende der Zeile die Phase stetig von 0° nach 180° verschoben und dann wieder in der folgenden Zeile von deren Anfang bis zu deren Ende von 180° bis 0° zurückgeschoben wird. Die Phasenverschiebung zwischen entsprechenden Stellen benachbarter Zeilen beträgt auch in diesem Fall 180°.

Wie bereits oben erläutert, wird der Einfachheit halber mit Phasenverschiebungen von 0° und 180° gearbeitet, und Phasenverschiebungen, hier also Phaseninvertierungen, werden im nicht sichtbaren Bereich einer Zeile ausgeführt. Das Invertieren der Phase kann einfach durch Umschalten erfolgen, was jedoch bei der Wiedergabe die Funktion des dort verwendeten FM-Demodulators aufgrund von Umschaltstörungen beeinträchtigen kann. Diese können z. B. dadurch behoben werden, daß das Umschalten in eine Zeitspanne gelegt wird, die einen Teil der Zeitspanne eines leicht nachbildbaren Signals ausmacht. Beim gelesenen Signal wird dann dieser Teil mit der Umschaltstörung ausgeblendet und nachgebildet. Eine Umschaltstörung kann ganz vermieden werden, wenn die Phase geschoben, statt geschaltet wird, z. B. dadurch, daß eines der Signale mit vorgegebener Frequenz im nicht sichtbaren Bereich für eine so lange Zeitspanne durch eine etwas höhere Frequenz versetzt wird, bis die gewünschte Phasenverschiebung, vorzugsweise 180°, erreicht ist.

Anhand der Fig. 7 und 8 soll nun die Wirkung der besprochenen Phasenverschiebungsmaßnahmen erläutert werden.

Fig. 7 zeigt schematisch einen Bildschirm mit einer linken größeren Fläche mit Graupegel G und einer rechten kleineren Fläche mit Weißpegel W. In Fig. 8 oben ist der Verlauf des zugehörigen Luminanzsignales des Originalbildes durchgezogen eingezeichnet. Das Luminanzsignal weist für eine vorgegebene Zeitdauer, und damit einen vorgegebenen Zeilenlängenteil, Graupegel auf. Es springt dann für den Rest jeder Zeile auf den Weißpegel W.

In Fig. 8 unten sind zwei Spuren aufgezeichnet, die als ungeradzahlige Spur u und geradzahlige Spur g bezeichnet werden. In jeder Spur sind vier Zeilen n bis n+3 vorhanden. Die Zeilen in der unteren, geradzahligen Spur sind etwas nach links, also nach früh, gegenüber den Zeilen in der oberen Spur verschoben. Für die jeweils drei ersten Zeilen n bis n+2 ist herkömmliches Aufzeichnen angenommen. In der vierten Zeile n+3 der unteren Spalte ist dagegen die Phase invertiert. Die unterschiedlichen Pegel des Luminanzsignals sind auf den Spuren als FM-Signale unterschiedlicher Frequenzen aufgezeichnet. Dem Graupegel G entspricht eine erste Frequenz f1, und dem Weißpegel entspricht eine höhere, zweite Frequenz f2. Die Grenze zwischen den jeweiligen beiden Bereichen einer Zeile mit unterschiedlicher Frequenzaufzeichnung ist in der Spurdarstellung gestrichelt eingetragen.

Würden die Zeilen aller Spuren exakt untereinanderliegen und würden die Aufzeichnungsfrequenzen für den Graupegel G und den Weißpegel W immer genau f1 bzw. f2 betragen, würde keine Signalverfälschung aufgrund von Übersprechen stattfinden. Der Lesekopfspalt 46 würde zwar außer der gerade gelesenen Spur, z. B. der oberen Spur u in Fig. 8, auch noch die darüberliegende und die darunterliegende Spur, in Fig. 8 die Spur g, abtasten, jedoch würden die dabei gelesenen Signale genau mit denen der eigentlich abgetasteten Spur übereinstimmen, so daß der Übersprecheffekt zu keinem Fehler führen würde. Derartige ideale Aufzeichnungsverhältnisse sind aber nicht realisierbar. Zum einen gibt der FM-Modulator 43 für einen vorgegebenen Luminanzpegel nicht dauernd exakt ein- und dieselbe Frequenz aus, z. B. die Frequenz f1, sondern die ausgegebene Frequenz driftet nach beiden Seiten um die eigentlich gewünschte Frequenz. Im Beispielsfall gemäß Fig. 8 soll die Frequenz bei den herausgegriffenen Zeilen der oberen, ungeradzahligen Spur u gerade stimmen, jedoch leicht zunehmen, so daß sie am Ende dieser Spur bereits bei einem Wert etwas über f1 liegt. Sind schließlich in der unten liegenden Spur g diejenigen Zeilen erreicht, die unter den herausgegriffenen Zeilen in der oberen Spur liegen, habe sich die Frequenz um den Wert $\Delta f$ geändert. Es liegen nun also die Frequenzen f1 + $\Delta f$ und f2 + $\Delta f$ vor. Wird durch das Übersprechen diese etwas erhöhte Frequenz erfaßt, führt dies zu einem Aufhellen des dargestellten Bildes gegenüber dem Original. Neben diesem grundsätzlich auftretenden Frequenzdriftfehler tritt u.a. auch grundsätzlich ein Spurversatzfehler auf, der in Fig. 8 dadurch dargestellt ist, daß die untere Spur gegenüber der oberen etwas nach links versetzt ist, wie bereits erwähnt. Dieser Spurversatz führt dazu, daß der Lesekopfspalt 46 (Fig. 2) dann, wenn er die obere Spur in Fig. 8 abtastet, den Grau-Weiß-Übergang durch das teilweise Lesen der unteren Spur bereits erfaßt, bevor er aus der eigentlich gelesenen Spur die Information über die Pegeländerung (durch Frequenzänderung) detektiert. Dieses Übersprechen führt zu Hell-Dunkel-Störungen entlang vertikalen Kanten. Die Wiedergabe vertikaler Kanten wird noch durch einen weiteren Effekt beeinträchtigt. Dieser hat mit der schwimmenden Phase des FM-Signales zu tun. Zum Erläutern des Effektes sei zunächst angenommen, daß das Signal mit der Frequenz f1 in der Zeile n der oberen Spur in Fig. 8 gerade an der gestrichelt eingezeichneten Frequenzänderungsgrenze einen Nulldurchgang habe. Beim Demodulieren wird dann genau auf der Grenze die Frequenz f1 festgestellt und der zugehörige Luminanzpegel weiter beibehalten, und zwar so lange, bis eine Frequenzänderung festgestellt wird. Dies erfolgt genau dann, wenn das Signal mit der Frequenz f2 einen ersten Nulldurchgang aufweist, der nach einer halben Wellenlänge des Signals mit der Frequenz f2 erfolgt. Dann wird auf den Weißpegel umgeschaltet. Nun sei angenommen, daß in einer anderen Zeile das Signal mit der Frequenz f1 an der gestrichelt markierten Grenze gerade seine maximale Amplitude aufweise. Es schließt sich dann das Signal der Frequenz f2 mit maximaler Amplitude beginnend an, so daß der nächste Nulldurchgang bereits nach einem Viertel der Wellenlänge des Signals mit der Frequenz f2 hinter der gestrichelten Markierung erfolgt. Es wird dann bereits auf einen neuen Helligkeitspegel umgeschaltet, der jedoch noch nicht dem Weißpegel entspricht, da die Zeitspanne zwischen den beiden letzten Nulldurchgängen des FM-Signals sich aus einer ersten Zeitspanne für die letzte Viertelwelle des Signals der ersten Frequenz f1 und einer zweiten Zeitspanne für die erste Viertelwellenlänge des Signals der zweiten Frequenz f2 zusammensetzt. Dadurch wird die in Fig. 7 dargestellte Kante zwischen der grauen und der weißen Fläche laufend örtlich und in ihrem Helligkeitsübergang etwas hin- und hergeschoben.

Die verschiedenen Fehler sind in den Luminanzsignalverläufen in Fig. 8 oben gestrichelt eingezeichnet. Wenn durch den Lesekopfspalt sowohl das Signal mit der Frequenz 1 wie auch das Signal der Nachbarzeile mit der Frequenz f1 + $\Delta f$ gelesen wird, kommt es zu einer Schwebung mit der Frequenz $\Delta f$. Diese Schwebung hat zur Folge, daß sich das Summensignal , aus dem das Luminanzsignal abgeleitet wird, immer langsam gegenüber der Mittenfrequenz f1 erhöht und erniedrigt, wodurch entsprechend die Helligkeit im Bild um den eigentlich vorgegebenen Wert schwankt. Die Schwebungsfrequenz ist in der Regel so niedrig, daß sich Helligkeitsänderungen über mehrere Zeilen erstrecken, also das Bild mit der Schwebungsfrequenz abwechselnd gegenüber der Helligkeit des Originals etwas heller bzw. dunkler wird. In Fig. 8 ist angenommen, daß aufgrund der Schwebung die effektive Frequenz etwas erhöht ist, wodurch für die eben gelesene Zeile n der Pegel G(n) für den grauen Bereich des Pegels etwas gegenüber dem Pegel G erhöht ist, wie er für das Original gilt. Entsprechend ist der Pegel für den weißen Bereich etwas auf einen Wert W(n) angehoben. Es ist weiter angenommen, daß die effektive Frequenz aufgrund der Schwebung gerade im Anwachsen ist, daß also die Hellig-

7

keitszunahme gegenüber der Originalhelligkeit ebenfalls im Anwachsen begriffen ist. Entsprechend sind die Pegel G(n+1), W(n+1), G(n+2) und W(n+2) für die folgenden Zeilen n+1 bzw. n+2 immer größer.

Die gestrichelten Linien in den Luminanzsignalen in Fig. 8 zeigen nicht nur langwellige Schwebungen, wie sie insbesondere durch Frequenzdrift des Modulators begründet sind, sondern auch höherfrequente Schwebungen, die u. a. durch den besprochenen Spurversatz bedingt sind. Diese Schwebungen liegen von Zeile zu Zeile phasen- und amplitudenmäßig sehr ähnlich. Die Amplituden dieser Schwebungen im Luminanzsignal sind für die Zeilen n bis n+2 mit A(n), A(n+1) bzw. A(n+2) bezeichnet.

Der mit der Vorrichtung gemäß Fig. 1 ausgeführten Maßnahme liegt folgende Erkenntnis zugrunde. Sind die Bildinhalte aufeinanderfolgender Zeilen und entsprechender Zeilen in aufeinanderfolgenden Bildern sehr ähnlich, was für die meisten Zeilen gilt, führen geringe Abweichungen in den Zeileninhalten, welche Abweichungen aufgrund der Übersprecheffekte erfaßt werden, zu Schwebungen im wiedergegebenen Signal und damit zu Helligkeitsschwankungen. Diese Schwebungen können relativ hochfrequent sein, z. B. bei Kantenübergängen, aber auch niederfrequent, z. B hervorgerufen durch Frequenzdrift des Modulators. Die Schwebungen sind durch sich ändernde Phasenbeziehungen zwischen den Signalen benachbarter Spuren bedingt. Die Phasenbeziehungen selbst sind völlig unbekannt, aber es ist bekannt, daß sich, wie eben erwähnt, die Beziehungen von untereinanderliegendem Zeilenpaar zu untereinanderliegendem Zeilenpaar nur wenig ändern. Wird nun die Information für eine Zeile gelesen, z. B. die Information für die Zeile n in der oberen Spur u in Fig. 8, überlagern sich diesem Signal übersprechende Signale aus der vorhergehenden (nicht dargestellten) und der folgenden Spur. Dies führt zu Schwebungen mit Schwingungsbäuchen und Schwingungsknoten in mehr oder weniger langen Abständen, je nach Schwebungsfrequenz. Der Einfachheit halber seien sehr niederfrequente Schwebungen betrachtet, bei denen die Kanten und Bäuche Abstände von einigen Zeilen aufweisen. In der Zeile n+2 sei gerade ein Schwingungsbauch in der Schwebung erreicht, der zu einer Aufhellung des Signals führt, was durch den hohen gestrichelt dargestellten Pegel G(n+2) in Fig. 8 dargestellt ist. Nun werde die Zeile n+3 in der ungeradzahligen oberen Spur u gelesen. Die Information in der zugehörigen Zeile n+3 in der unteren geradzahligen Spur g sei in der Phase gegenüber dem Signal vom FM-Modulator invertiert. Dies hat zur Folge, daß beim Lesen der Signale in der Spur u zwar wieder Übersprechen mit den Signalen in der unteren Spur g stattfindet, und daß es wieder zu Schwebungen kommt, daß nun aber die Schwingungsbäuche der Schwebung in der Phase gegenüber denjenigen Bäuchen invertiert sind, die vorliegen würden, wenn die Phase des in der unteren Spur aufgezeichneten Signales für dieselbe Zeile n+3 nicht invertiert wäre. Da sich aber die Schwebungsinformation von Zeile zu Zeile kaum ändert, bedeutet das Invertieren dieser Information, daß eine in der Vorzeile durch die Schwebung bewirkte Helligkeitserhöhung nun eine Helligkeitserniedrigung um ziemlich denselben Betrag gegenüber der nicht durch Schwebungen verfälschten Helligkeit bewirkt. In Fig. 8 ist dies dadurch eingezeichnet, daß der Helligkeitspegel für den grauen Bereich auf einen Wert G' (n+3) abgesenkt ist, der in etwa (tatsächlich etwas mehr) unter dem Pegel G liegt, wie das Signal G(n+2) über dem genannten Graupegel liegt. Entsprechendes gilt für die Beziehung von Weißpegelsignalen W' (n+3) und W(n+2) in bezug auf den Weißpegel W. Auch die raschen Helligkeitsschwankungen nahe der horizontalen Kante sind umgekehrt, mit einer Amplitude A' (n+3).

Generell läßt sich folgendes sagen:
- für Zeilen gleichen Informationsgehalts in einem Original ergeben sich aufgrund von Aufzeichnungsfehlern Unterschiede in der gelesenen Information von Zeile zu Zeile; diese Fehler von Zeile zu Zeile unterscheiden sich jedoch nur sehr wenig voneinander;
- diese Fehler führen zu mehr oder weniger höherfrequenten Schwebungen, die sich als Helligkeitsschwankungen äußern; diese Helligkeitsschwankungen ändern sich von Zeile zu Zeile kaum, da sich die Schwebungen kaum ändern, da sich die Aufzeichnungsfehler von Zeile zu Zeile nur wenig ändern;
- wird in einer Spur gedanklich die Phase des FM-Signals gegenüber derjenigen Phase invertiert, die das Signal zunächst hatte, bleibt die Frequenzinformation für alle Zeilen dieser Spur völlig unverändert, jedoch wird die Schwebung in bezug auf die FM-Information in der benachbarten Zeile invertiert; diese Schwebung würde an allen Stellen des Bildes zu Aufhellungen führen, an denen zuvor Abdunklungen vorhanden waren, und umgekehrt; wenn alle Fehler über den gesamten Schirm invertiert wären, wäre die Bildqualität unverändert schlecht;
- wird die Phase beim Aufzeichnen dagegen von Zeile zu Zeile einer Spur invertiert, invertieren die Schwebungen von einer Zeile zur anderen ihre Phase, wodurch von Zeile zu Zeile Aufhellungen gegenüber der Originalhelligkeit mit Abdunklungen wechseln; nun sind Helligkeitsabweichungen jeweils im Mittel über zwei Zeilen beseitigt; dies führt zu ruhigen, scharfen Kanten und ruhigen Flächen.

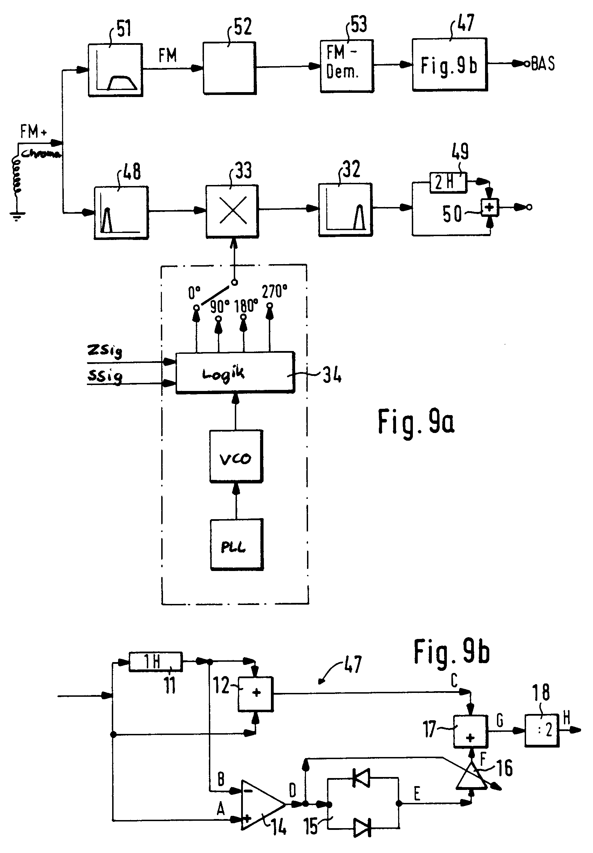

Die Mittelung einer etwas aufgehellten Zeile oder eines etwas aufgehellten kleinen Zeilenabschnitts, z. B. an einer Kante, mit einer entsprechend abgedunkelten Folgezeile oder einem entsprechend abgedunkelten folgenden Zeilenabschnitt muß nicht notwendigerweise mit dem Auge erfolgen. Vielmehr kann hierzu eine Schaltung verwendet werden, wie sie im folgenden anhand der Fig. 9a und 9b erläutert wird. Das Verwenden dieser Schaltung empfiehlt sich insbesondere dann, wenn Übersprechfehler relativ stark sind, was dann der Fall ist, wenn im Longplay-Verfahren aufgenommene Kassetten mit einem Standardkopf abgespielt werden oder wenn gar Kassetten (mit einem Longplaykopf) abgespielt werden, die nur mit einem Drittel der Standardbandgeschwindigkeit beschrieben wurden.

Die Schaltung gemäß Fig. 9a unterscheidet sich nur durch den mit "Fig. 9b" beschrifteten Block 47, nämlich einer Schaltung zum Bearbeiten von Luminanzsignalen, von Schaltungen, wie sie aus dem Stand der Technik bekannt sind. Daher wird auf die Schaltung gemäß Fig. 9a nur kurz eingegangen. Sie weist einen oberen FM-Teil und einen unteren Chromateil auf. Im Chromateil liegen ein Tiefpaß 48, ein Mischer 33 und ein F-Hochpaß 32 vor. Der Mischer 33 erhält phasengeschaltet eine Mischfrequenz von einer Mischfrequenzschaltung 34. Das Ausgangssignal vom F-Hochpaß 32 gelangt unmittelbar sowie verzögert über ein F-Verzögerungsglied 49 an ein F-Additionsglied 50. Dieses gibt ein F-Signal aus, in dem Übersprechfehler aufgrund von Phasenkompensationen im F-Additionglied 50 gemittelt sind.

Der obere FM-Teil verfügt über einen FM-Hochpaß 51, eine Signalbearbeitungsschaltung 52 und einen FM-Demodulator 53. Letzterer gibt das amplitudenmodulierte BAS-Signal nicht unmittelbar an einen BAS-Ausgangsanschluß 54, wie dies bei Schaltungen gemäß dem Stand der Technik der Fall ist, sondern zwischen den Demodulator und den Ausgangsanschluß ist die Luminanzbearbeitungsschaltung 47 geschaltet.

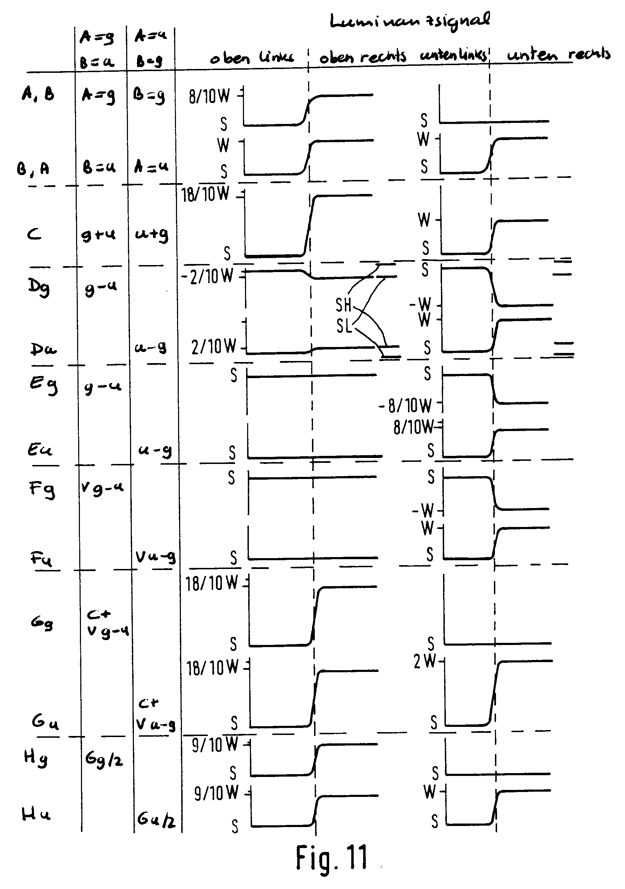

Gemäß Fig. 9b weist die Luminanzbearbeitungsschaltung 47 folgende Funktionsgruppen auf: ein Verzögerungsglied 11, das das eintreffende Luminanzsignal um die Dauer einer Zeile (1H) verzögert und als verzögertes Signal B ausgibt, ein Additionsglied 12, das das verzögerte Signal B und ein unverzögertes Signal A addiert und die Summe als Additionssignal C ausgibt, ein Subtraktionsglied 14, das das verzögerte Signal B vom unverzögerten Signal A subtrahiert und als Differenzsignal D ausgibt, eine Durchlaß-Schwellenschaltung 15, die das Differenzsignal D empfängt und als bewertetes Signal E nur diejenigen Pegelanteile des Differenzsignales durchläßt, die entweder einen oberen Schwellenwert SH oder einen unteren Schwellenwert SL (Fig. 11) übersteigen, einen Verstärker 16, der das bewertete Signal E im wesentlichen auf denjenigen Pegel hebt, den es vor dem Bewerten hatte, und als Signal F ausgibt, ein zweites Additionsglied 17, zum Addieren des Additionssignales C und des verstärkten entstörten Signales F, zum Ausgeben eines bearbeiteten Ausgangssignales G an ein Divisionglied 18, das das Ausgangssignal halbiert und als BAS-Signal (Signal H) ausgibt.

Die Funktion der Schaltung gemäß Fig. 9b sei mit Hilfe der Fig. 10 und 11 erläutert. Fig. 10 stellt schematisch einen Bildschirm dar, bei dem die linke Bildhälfte ganz schwarz ist, der obere rechte Quadrant eine Helligkeit von 9/10 des Weißpegels aufweist und im unteren rechten Quadranten abwechselnd weiße und schwarze Zeilen vorhanden sind. Im oberen rechten (fast weißen) Quadranten trete eine Bildverfälschung aufgrund von Übersprechfehlern auf, die sich in hellen und dunklen Zeilen äußere, die jeweils um ein Zehntel der Helligkeit des Weißpegels von der eigentlich vorgegebenen Helligkeit von 9/10 des Weißpegels abweichen. Jeweils eine Zeile weist also genau Weißpegel auf, während die folgende nur 8/10 des Weißpegels darstellt. Es ist dies genau der Effekt, wie er hervorgerufen wird, wenn FM-Signale, wie sie mit einer Vorrichtung gemäß Fig. 1 aufgezeichnet wurden, mit einer bekannten Vorrichtung wiedergegeben werden, die also zwischen dem FM-Demodulator 53 und dem BAS-Ausgangsanschluß 54 nicht die Schaltung gemäß Fig. 9b aufweisen. Ist diese Schaltung jedoch vorhanden, treten die genannten Streifen mit Weißpegel bzw. 8/10 des Weißpegels nicht auf, sondern alle Zeilen im oberen Quadranten zeigen die ausgemittelte Originalhelligkeit von 9/10 des Weißpegels. Die schwarzen und dunklen Zeilen im unteren rechten Quadranten sind dagegen nicht zu einer einheitlich grauen Fläche ausgemittelt. Wie dies erfolgt, geht aus Fig. 9b und den zugehörigen Diagrammen zu den Signalen A - H hervor, wie sie in Fig. 11 dargestellt sind. In Fig. 11 tragen die Signale D - H die Zusatzbezeichnung g oder u. "Dg" bedeutet z. B., daß es sich hier um das Signal D handelt, wie es gebildet wurde, wenn das unverzögerte Signal A dasjenige für eine geradzahlige Zeile ist. "Du" ist entsprechend das Signal D für den Fall, daß das unverzögerte Signal A zu einer ungeradzahligen Zeile gehört. Die Luminanzsignalverläufe für geradzahlige und ungeradzahlige Zeilen sind in den oberen vier Diagrammen von Fig. 11 eingezeichnet.

Das Additionsglied 12 sorgt dafür, daß die Helligkeit jeweils zweier aufeinanderfolgender Zeilen gemittelt wird. An dieser Mittelung wird nichts mehr geändert, wenn die Helligkeitsdifferenz, genauer gesagt die Differenz der zugehörigen Luminanzsignalamplituden innerhalb dem Bereich zwischen den genannte Schwellen SH und SL liegt. Dann wird nämlich im zweiten Additionsglied 17 zum Additionssignal C nichts addiert, da dann das verstärkte entstörte Signal F den Wert 0 aufweist. Überschreitet die Helligkeitsdifferenz zwischen benachbarten Zeilen dagegen eine vorgegebene Schwelle, tritt ein Differenzsignal auf, das im zweiten Additionsglied 17 zum gemittelten Additionssignal C addiert wird und damit die Mittelung wieder aufhebt. Daher werden abwechselnd schwarze und weiße Zeilen und auch horizontale Übergänge zwischen schwarzen und weißen Flächen genau wiedergegeben.

EP 0 413 185 B1

**Patentansprüche**

1. Vorrichtung (30) zum Aufzeichnen von FM-Signalen in Schrägspuren eines Video-Magnetbandes, mit
   - einem FM-Modulator (43) zum Wandeln eines amplitudenmodulierten Luminanzsignales in ein FM-Signal,
   - einer Schreibkopfanordnung (38) zum Schreiben des FM-Signales auf das Band,
   - einer Schaltungsanordnung (42) zum Ausgeben eines Zeilensignals und eines Spursignals und
   - einem Phasenschieber (40) der das Zeilensignal und das Spursignal erhält, zum Ausgeben eines FM-Signals an die Schreibkopfanordnung mit vorgegebenen Phasenverschiebungen gegenüber der Phase des FM-Signals vom FM-Modulator für welche Phasenverschiebungen folgendes gilt:
     -- für eine beliebige Zeile n einer beliebigen Spur m ist die Phasenverschiebung eine beliebig festgelegte erste Phasenverschiebung P1,
     -- für die Zeile n+1 derselben Spur m ist die Phasenverschiebung eine beliebig festgelegte zweite Phasenverschiebung P2,
     -- für die in der folgenden Spur m+1 unter der Zeile n liegende Zeile ist die Phasenverschiebung eine beliebig festgelegte dritte Phasenverschiebung P3,
     -- und für die in der folgenden Spur m+1 unter der Zeile n+1 liegende Zeile weist eine vierte Phasenverschiebung P4 einen durch die anderen drei Phasenverschiebungen so vorbestimmten Wert auf, daß die Differenz D zwischen der Differenz D1 der vierten und der zweiten Phasenverschiebung (D1 = P4-P2) und der Differenz D2 der dritten und der ersten Phasenverschiebung (D2 = P3-P1) 180° beträgt (D = D1-D2 = 180°),
     **dadurch gekennzeichnet**, daß
   - der Phasenschieber (40) zwischen dem FM-Modulator (43) und der Schreibkopfanordnung (38), angeordnet ist.

2. Vorrichtung nach Anspruch 1 zum Wiedergeben des Videosignals, mit einem FM-Demodulator (53), der das aus dem gelesenen Videosignal ausgefilterte FM-Signal in ein amplitudenmoduliertes Luminanzsignal (A) wandelt,
   **dadurch gekennzeichnet,**
   daß hinter dem FM-Demodulator (53) eine Luminanzbearbeitungsschaltung (47) angeordnet ist, die enthält:
   - ein Verzögerungsglied (11) zum Verzögern des Luminanzsignales (A) um eine Zeilendauer (1H),
   - ein erstes Additionsglied (12) zum Addieren des verzögerten Luminanzsignals (B) und des unverzögerten Luminanzsignals (A) und zum Ausgeben des dabei gebildeten Additionssignales (C),
   - ein Subtraktionsglied (14) zum Subtrahieren der beiden amplitudenmodulierten Luminanzsignale (A, B) voneinander und zum Ausgeben eines durch die Subtraktion gebildeten Differenzsignales (D),
   - eine Durchlaß-Schwellenschaltung (15) zum Ausgeben eines bewerteten Signales (E), wobei diese Schaltung so ausgebildet ist, daß sie das vom Subtraktionsglied (14) gebildete Differenzsignal (D) als bewertetes Signal E nur dann ausgibt, wenn das Differenzsignal (D) einen oberen Schwellwert (SH) der Schwellenschaltung (15) überschreitet oder einen unteren Schwellwert (SL) dieser Schaltung unterschreitet,
   - und ein zweites Additionsglied (17) zum Addieren des bewerteten Signales (E) zum Additionssignal (C) und zum Ausgeben eines durch die Addition gebildeten Ausgangssignales (G).

**Claims**

1. Device (30) for recording FM signals in helical tracks of a video magnetic tape, comprising
   - an FM modulator (43) for converting an amplitude-modulated luminance signal into an FM signal,
   - a writing-head system (38) for writing the FM signal onto the tape,
   - a circuit system (42) for emitting a line signal and a track signal, and
   - a phase shifter (40), which receives the line signal and the track signal, for emitting an FM signal to the writing-head system with specified phase shifts with respect to the phase of the FM signal from the FM modulator, to which phase shifts the following applies:
     -- for any line n of any track m, the phase shift is a randomly determined first phase shift P1,
     -- for the line n+1 of the same track m, the phase shift is a randomly determined second phase shift P2,
     -- for the line situated in the next track m+1 below the line n, the phase shift is a randomly determined third phase shift P3,

-- and for the line situated in the next track m+1 below the line n+1, a fourth phase shift P4 has a value predetermined by the other three phase shifts which is such that the difference D between the difference D1 of the fourth and the second phase shift (D1 = P4-P2) and the difference D2 of the third and the first phase shift (D2 = P3-P1) is 180° (D = D1-D2 = 180°),

characterized in that the phase shifter (40) is disposed between the FM modulator (43) and the writing-head arrangement (38).

2. Device according to Claim 1, for playing back the video signal, comprising an FM demodulator (53) which converts the FM signal filtered out of the read video signal into an amplitude-modulated luminance signal (A),

characterized in that there is disposed downstream of the FM demodulator (53) a luminance processing circuit (47) which contains:

- a delay element (11) for delaying the luminance signal (A) by one line duration (1H),
- a first addition element (12) for adding the delayed luminance signal (B) and the undelayed luminance signal (A) and for emitting the addition signal (C) formed in this process,
- a subtraction element (14) for subtracting the two amplitude-modulated luminance signals (A, B) from one another and for emitting a difference signal (D) formed by the subtraction,
- a transmission threshold circuit (15) for emitting a weighted signal (E), said circuit being so designed that it emits the difference signal (D) formed by the subtraction element (14) as a weighted signal E only if the difference signal (D) exceeds an upper threshold value (SH) of the threshold circuit (15) or is below a lower threshold value (SL) of said circuit,
- and a second addition element (17) for adding the weighted signal (E) to the addition signal (C) and for emitting an output signal (G) formed by the addition.

## Revendications

1. Appareil (30) pour enregistrer des signaux FM sur des pistes obliques d'une bande magnétique vidéo, comportant:
   - un modulateur FM (43) pour convertir en un signal FM un signal de luminance modulé en amplitude,
   - un dispositif à tête d'écriture (38) pour écrire le signal FM sur la bande,
   - un dispositif de circuit (42) pour émettre un signal de ligne et un signal de piste et
   - un décaleur de phase (40) qui reçoit le signal de ligne et le signal de piste pour envoyer au dispositif à tête d'écriture un signal FM présentant, par rapport à la phase du signal FM provenant du modulateur FM des décalages de phase prescrits pour lesquels est valable ce qui suit:
     -- pour une ligne quelconque n d'une piste quelconque m, le décalage de phase est un premier décalage de phase P1 déterminé arbitrairement,
     -- pour la ligne n+1 de la même piste m le décalage de phase est un second décalage de phase P2 déterminé arbitrairement,
     -- pour la ligne située sous la ligne n sur la piste suivante m+1, le décalage de phase est un troisième décalage de phase P3 déterminé arbitrairement,
     -- et pour la ligne située sous la ligne n+1 sur la piste suivante m+1 , un quatrième décalage de phase P4 présente une valeur prédéterminée par les trois autres décalages de phase en ce sens que la différence D entre la différence D1, entre le quatrième et le second décalages de phase (D1 = P4-P2) et la différence D2 entre le troisième et le premier décalages de phase (D2 = P3-P1) vaut 180° (D = D1-D2 = 180°),
     caractérisé par le fait
   - que l'organe décaleur de phase (40) est disposé entre le modulateur FM (43) et le dispositif à tête d'écriture (38).

2. Appareil selon la revendication 1 pour restituer le signal vidéo, comportant un démodulateur FM (53) qui convertit en un signal de luminance modulé en amplitude (A) le signal FM extrait, par filtrage, du signal vidéo lu,

   caractérisé

   par le fait que derrière le démodulateur FM (53) est disposé un circuit (47) de traitement de la luminance, qui contient:
   - un élément de temporisation (11) pour retarder, de la durée d'une ligne (1H), le signal de luminance (A),
- un premier élément d'addition (12) pour additionner le signal de luminance, retardé, (B) et le signal de luminance non retardé (A) et pour émettre le signal d'addition ainsi formé (C),
- un élément de soustraction (14) pour soustraire l'un de l'autre les deux signaux de luminance modulés en amplitude (A, B) et pour émettre un signal de différence (D) formé par la soustraction,
- un circuit à seuil de passage (15) pour émettre un signal pondéré (E), ce circuit étant conçu de façon à n'émettre comme signal pondéré (E) le signal de différence (D) formé par l'organe de soustraction (14) que si le signal de différence (D) dépasse une valeur de seuil supérieure (SH) du circuit à seuil (15) ou est inférieure à une valeur de seuil inférieure (SL) de ce circuit.
- et un second élément d'addition (17) pour additionner le signal pondéré (E) avec le signal d'addition (C) et pour émettre un signal de sortie (G) formé par l'addition.

Fig. 1

46

| u | 180° | 0° | 180° | 0° |
| g | 0° | 0° | 0° | 0° |
| u | 180° | 0° | 180° | 0° |

Zeile n    Zeile n+1

Fig. 2

| 0° | 180° | 0° | 180° |
| 180° | 180° | 180° | 180° |
| 0° | 180° | 0° | 180° |

Zeile n    Zeile n+1

Fig. 3

Spur m

Spur m+1

| P1 | P2 |
| P3 | P4 |

Fig. 4

| u | 10° | 30° | 320° |
| g | 50° | 250° | 280° |
| u | 20° | 100° | 250° |

Fig. 5

64 µsec

180°          180°
u    0° 0°
g    0°    0°

Fig. 6

| G | W |

Fig. 7

Fig. 10

Fig. 8

EP 0 413 185 B1

Fig. 9a

Fig. 9b

Fig. 11